(19) **Europäisches Patentamt European Patent Office Office européen des brevets**

(11) **EP 2 357 603 A1**

(12) **EUROPEAN PATENT APPLICATION**

(43) Date of publication:
**17.08.2011 Bulletin 2011/33**

(51) Int Cl.:
*G06Q 99/00* (2006.01)

(21) Application number: **10151859.5**

(22) Date of filing: **28.01.2010**

| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(71) Applicant: **Honda Research Institute Europe GmbH**<br>**63073 Offenbach/Main (DE)** | (72) Inventors:<br>• **Dr. Jin, Yaochu**<br>  **63110, Rodgau (DE)**<br>• **Dr. Sendhoff, Bernhard**<br>  **63486, Bruchköbel (DE)**<br><br>(74) Representative: **Rupp, Christian**<br>**Mitscherlich & Partner**<br>**Patent- und Rechtsanwälte**<br>**Sonnenstrasse 33**<br>**80331 München (DE)** |
|---|---|

(54) **Evolutionary design optimization of real world structures with adaptive manipulation of nonlinear constraints**

(57)     The present invention relates to an optimization method for optimizing a design of encoded physical structures based on an evolution algorithm, to a computer software for executing such a method as well as to a system using such a method for the optimization of a structure's design. This invention can be applied for design optimization with one or more nonlinear constraints.

Fig. 5

**Description**

The present invention relates to an optimization method for optimizing a design of encoded physical structures based on an evolutionary algorithm, to a computer software for executing such a method as well as to a system using such a method for the optimization of a structure's design. This invention can be applied to design optimization with one or more nonlinear constraints and may be used to optimize aerodynamic or hydrodynamic structures.

"Optimizing" is to be understood as an improvement, in terms of physical entities, of a real world body, wherein the improvement is stopped when a termination criterion is met.

Computational science and engineering techniques have allowed a major change in the way products can be engineered. Rather than building real world prototypes and performing experiments thereon, a computational model can be built and the physical design improvement processes can be simulated thereon. Using such a model, many design alternatives can be explored computationally in a fraction of the time previously required. The technique can - amongst others - be applied in the areas of aviation, automotive engineering, environmental assessment, etc. With respect to the invention, "optimization of a design" is understood as the process of encoding a physical structure (or model, body, shape, design, etc.) to be optimized (using e.g. spline encoding, CAD data representation, etc.) into a set of parameters (a number of points, curves, faces, etc.) for building a set of candidate designs (models), also known as individuals in evolutionary optimization. The model(s) represent the encoded structure with all parameters of interest. An optimized encoded representation of the structure, which yields an improved design with respect to at least one physical property of the previously encoded structure, is generated. Based on the best found model, which is obtained by computing parameter values that minimize or maximize an objective function or multiple objectives, data is output representing the optimized structure (optimized structure data). Also, the output optimized structure data possibly constitutes a building plan for building the optimized structure in the real world. The optimized structure data may be further processed automatically, e.g. to retrieve CAD data and/or instructions which may be directly fed into a CAD milling machine or a 3D-Plotter. Because almost all real world problems have bounds on the parameter values, it is necessary to bind the search by limits. Further, it is often necessary to place further constraints on the solution.

The structure can be encoded through sensorial information acquired by sensors, e.g. optical, tactile and/or acoustic sensors and/or may be obtained from a software/hardware interface and/or a pre-processing unit.

The inputs to the objective function may represent relevant parameters of the structure's design, e.g. geometric properties such as curvature. The outputs of the objective function may represent the physical properties of the design. E.g., a wing's curvature (input) may be adapted to yield minimal lift-to-drag ratio (output).

In particular, the invention deals with both single and multi-objective optimization subject to certain constraints. In the multi-objective optimization case, multiple physical properties are to be optimized simultaneously, e.g. weight, tensile strength, drag, etc. The two ot more objectives may also be conflicting.

In the optimization process, evolutionary algorithms (EAs) are used for finding the best design. The optimization is started on an initial candidate design (model set) constituting an initial population. Models providing the best solutions are selected and a new population generation is obtained (also called offspring of the previous population) on basis of the previously selected models. In multi-objective case, the solutions are ranked according to a dominance comparison considering all objectives, and solutions with a higher rank are selected. Basic operations such as mutation and recombination are used to create diversity in the population and thereby allow obtaining new models diverging from otherwise obtained models. To eliminate unfavorable modifications and to proceed with modifications which increase the overall quality of the models, the selection operation is again used to select the best deviations of models and so on. Selection of the best, the fittest, offspring reduces diversity and acts as a force pushing improvement according to the objective functions.

This invention applies a neural network model for approximate the constraint functions. Neural networks can generally be used to infer unknown functions from observations (data).

A neural network thereby consists of a set of neurons and a set of synapses. The synapses connect neurons and store information in parameters called weights, which are used in transformations performed by the neural network and learning processes.

Encoded parameters are accepted by the neural networks, and are processed using the neural networks implemented by hardware units and software components. An output is obtained resembling the best solution found for the optimization problem, which may serve as input to other systems for further processing. The output may be provided to a software and/or hardware interface or may be transferred to another processing unit.

Computations and transformations required by the invention and the application of EAs and neural networks as well as those necessary for maintaining, adjusting and training the neural network, may be performed by a processing means such as one or more processors (CPUs), signal processing units or other calculation, processing or computational hardware and/or software, which might also be adapted for parallel processing. Processing and computations may be performed on standard off the shelf (OTS) hardware or specially designed hardware components. A CPU of a processor may perform the calculations and may include a main memory (RAM, ROM), a control unit, and an arithmetic logic unit (ALU). It may also address a specialized graphic processor, which may provide dedicated memory and processing capabilities for handling the computations needed.

Also data storage is usually provided. The data storage is used for storing information and/or data obtained, needed for processing and results as well as data required by the neural network. The stored parameters may be adapted to facilitate the leaning of the neural network.

The storage may be provided by devices such as a hard disk (HDD), RAM and/or ROM, which may be supplemented by other (portable) storage media such as floppy disks, CD-ROMs, Tapes, etc.. Hence, a program encoding a method according to the invention as well as data acquired, processed, learned or needed in/for the application of the inventive system and/or method may be stored in a respective storage medium.

In particular, the method described by the invention may be provided as a software program product on a (e.g., portable) physical storage medium which may be used to transfer the program product to a processing system or a computing device in order to instruct the system or device to perform a method according to this invention. Furthermore, the method may be directly implemented on a computing device or may be provided in combination with the computing device.

## Technical Background

To handle constraints in evolutionary optimization, many methods have been developed [1-2]. The most often used approach in EAs applies a penalty function to infeasible solutions. Consider the following nonlinear constrained minimization problem:

$$minimize \quad f(x), \ x = (x_1, \cdots, x_n)$$
$$subject \ to \quad g_j(x) \leq 0, \ j \in \{1, \cdots, m\} \quad (1)$$

where $g_j(x)$ are nonlinear functions. The penalty function approach converts the constrained optimization problem (1) into an unconstrained one by adding (or subtracting) a certain value multiplied by a penalty factor of $r_j$ to the objective function as follows:

$$\phi(x) = f(x) \pm \sum_{j=1}^{m} r_j \times G_j(x) \quad (2)$$

In evolutionary optimization, the penalty function $G_j(x)$ is often defined $g_i^\beta(x)$, where $\beta$ is often set to 1 or 2.

The major problem with the penalty function method is that there is no principled way to determine the optimal penalty factor $r_j$. To address this problem, two methods have been proposed for setting up the penalty factor, namely, dynamic penalty and adaptive penalty methods. The basic idea of dynamic penalty is to increase the penalty factor over generations, e.g. in [3].

A step further is to adjust the penalty factor based on feedback of the search results. The basic idea is to increase the penalty factor if the best individual in the last population generation is always feasible, and to decrease the penalty factor otherwise. The Adaptive Segregational Constraint Handling Evolutionary Algorithm (ASCHEA) is a typical example [4]. This method uses an evolution strategy (ES) and consists of three main parts: an adaptive penalty function, a recombination guided by the constraints and a segregational selection operator. ASCHEA allows for finer tunings of the penalty factor and maintains diversity using niching.

Nevertheless, this method needs to include a few user-defined parameters and requires a high number of fitness evaluations. Another adaptive penalty method is termed as Self-Adaptive Fitness Formulation (SAFE) [5]. It is composed of three steps, i.e., computing the sum of constraint violation for each individual, identifying the best and worst solutions and applying a penalty. The basic idea is to favor infeasible solutions that have a high fitness value. Even though SAFF does not require any extra user-defined parameters and its implementation is relatively simple, it takes a large number of fitness function evaluations.

In addition to penalty function based methods, other approaches to handling constraints have also been suggested. A well-known and efficient method is the Stochastic Ranking Evolutionary Strategy (SRES) introduced in [6], which is based on a $(\mu,\lambda)$-ES that employs a penalty function and a stochastic ranking (SR) scheme. The motivation of SR is to balance the influence of the objective function and the penalty function in fitness assignment fitness without defining a penalty factor. SR is easy to implement and shown to be more efficient than penalty function approach.

Other approaches for handling constraints include multi-objectivization [7], i.e., to convert a few or all constraints to objectives to be optimized, repairing [8], where the infeasible solutions are changed by the human user so that they becomes feasible, and use problem-specific representations or genetic operators to avoid infeasible solutions [9]. A detailed overview of existing techniques for handling constraints in evolutionary optimization can be found in [10].

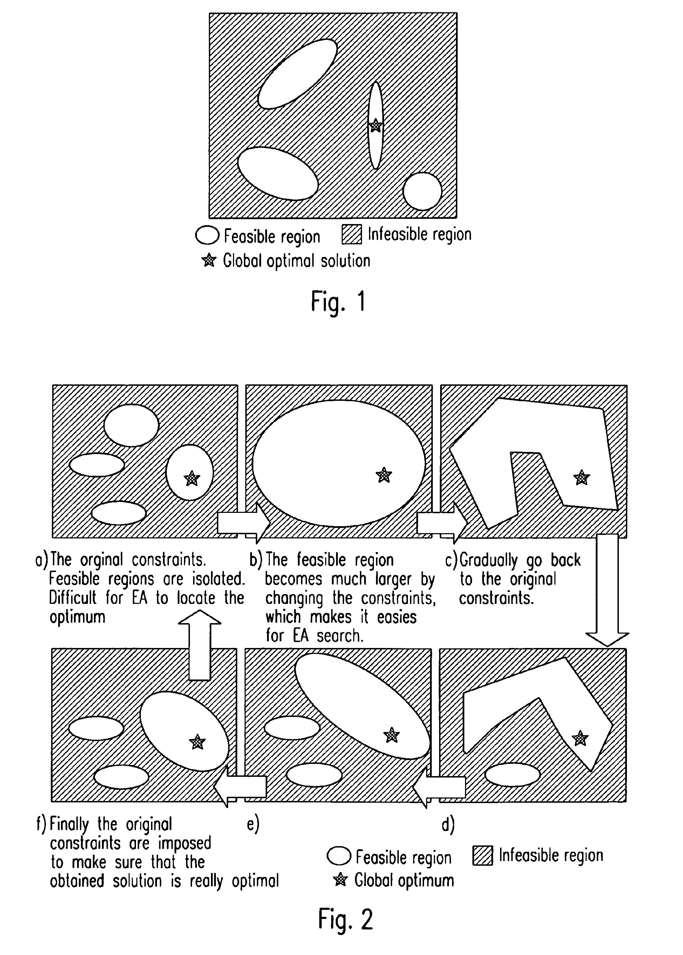

Structural design optimization often involves a large number of nonlinear constraints. As a result, the design space of nonlinearly constrained problems is divided into a number of isolated feasible regions, refer to Fig.1. Optimization problems with isolated feasible regions are inefficient to solve for population-based global search algorithms, such as evolutionary algorithms.

Evolutionary algorithms have been employed for solving many scientific and engineering optimization problems. However, most EA-based optimization techniques are insufficient in searching highly constrained design spaces, particularly those with small separate feasible regions.

It is an object of the invention to provide a new process for efficiently solving nonlinear constrained design optimization using evolutionary algorithms not exhibiting the disadvantages of prior approaches.

## Summary of the invention

This object is achieved by a method and a system according to the independent claims. Advantageous embodiments are defined in the dependent claims.

The invention solves this problem by providing a method for optimizing a structural design of a physical object, comprising obtaining sensorial information on the object to be optimized through an accepting means, generating an initial parent population using a processing means, determining the number of variables involved in a constraint function using the processing means, sampling a number of variables involved in the constraint function as data points for the constraint function based on the determination using the processing means, training a neural network model using the sampled data points using the processing means, setting a generation value for an allowed maximum of generations using the processing means, performing, using the processing means, for each generation until the generation value is reached the steps of applying a genetic variation to individuals to generate offspring from a population, evaluating a fitness of each offspring individual, calculating a penalty using synthetic constrains for each offspring individual, stochastically ranking the offspring individuals based on the fitness and the penalty, and selecting a number of offspring individuals according to the stochastic ranking as the parents for the next population, and returning the best individual representing the optimal design for further processing using an output means.

The data points for training the neural network model for approximating constraint functions can be sampled using a Latin hypercube method.

The number of sampled data points may depend on the number of variables involved in the constraint function.

At least two data points can be sampled.

The accuracy of the approximation increases gradually with the number of data points, which increas with proceeding evolution.

The application of genetic variations may include performing for each constraint the steps of generating a new set of data samples for the constraint function, training the neural network model with the sampled data, comparing a number of feasible solutions resulting from the original and a approximate constraints, and using the constraint resulting in a higher number of feasible solutions for the synthetic constraints.

The original constraints can be used, if the predefined value related to the number of generations is not met.

The genetic variation may be a recombination and/or mutation.

The initial parent population can be random or based on the obtained sensorial information constituting an initial generation.

The procedure for training the neural network model with a number of samples, comparing a number of feasible solutions resulting from the original and the approximate constraints, and using the constraint resulting in a higher number of feasible solutions for the synthetic constraints needs to be performed may be performed before stochastic ranking.

The original constraints at the final generations can be processed before evolution can be complete to guarantee that a finally found optimal solution is always feasible.

The accepting means may be at least one of a sensor, a hardware interface and a software interface.

The processing means can be a processor and/or a signal processing unit formed of hardware and/or software.

The processing means may be adapted for parallel processing.

The method according to any one of the preceding claims, wherein the output means is at least one of a hardware interface, a software interface and an actor.

The number of data points to be sampled may increase as the evolution proceeds so that the approximation accuracy increases gradually, i.e., the neural network models will converge to the corresponding constraint function as the evolution continues.

The number of data points can at least be two for each constraint function.

In another aspect, the invention provides computer software program product, performing the method accordingly when run on a computing unit.

In yet another aspect, the invention provides a system for optimizing a structural design of a physical object, comprising an accepting means obtaining sensorial information on the object to be optimized, a processing means for executing a method laid out above, and an output means the best individual representing the optimal design for further processing using an output means.

## Brief description of the figures

**Fig. 1** illustrates nonlinear constrained problems with isolated feasible regions. The global optimum is located in a very small feasible region, which is difficult to find for global search algorithms.

**Fig. 2** shows a manipulation of nonlinear constrains to change the connectivity of the feasible regions.

**Fig. 3** displays original nonlinear constraint functions and original feasible regions (shaded region) (a) and approximate constraint functions and manipulated feasible region (b).

**Fig. 4** illustrates a process according to the invention.

**Fig. 5** shows a flowchart for an adaptive manipulation of constraints.

**Fig. 6** pictures a speed reducer to be optimized.

**Fig. 7** shows a pressure vessel, the design of which can be optimized using the present invention.

## Detailed Description

The basic idea of the invention is to manipulate the nonlinear constraints in such a way that the feasible regions become connected in the beginning. By manipulation, we mean the artificial change of constraint functions so that the resulting feasible regions becomes connected, or most of the feasible regions become connected, which facilitates the evolutionary search. During constraints manipulation, some infeasible solutions may be considered to be feasible temporarily.

As the evolutionary search goes on, the manipulated feasible region gradually change back to the original feasible region to ensure that the optimum found by the evolutionary algorithm does not violate any of the constraints. In this way, evolutionary algorithms can efficiently find the global and feasible optimal solution. Refer to **Fig. 2.**

We assume that the disconnectedness of the feasible regions results from the nonlinearity of the constraints. Thus, by having a connected feasible region, we can start from a linear approximation of the nonlinear constraints and then increase the complexity of the approximate constraints by increasing the accuracy. In this way, the manipulation of the feasible region conceived in **Fig. 2** can be realized.

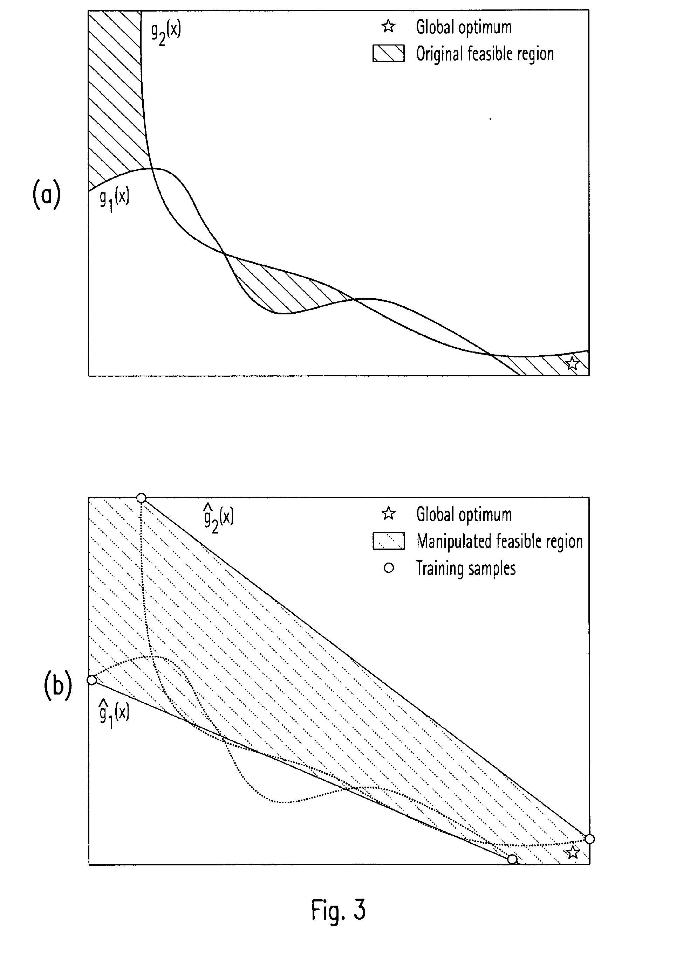

To achieve an approximate model with an increasing accuracy, which also means an increasing nonlinearity, we train a neural network model for each constraint with an increasing number of training data. In the beginning, only a small number of samples are used. Consequently, only a rough approximation of the nonlinear constraint can be achieved. As the evolution proceeds, additional data points will be sampled, resulting in an increasingly accurate approximation of the nonlinear constraints. With the more accurate approximation of the constraints, the manipulated feasible region will change back to the true feasible region. Refer to **Fig. 3.** The neural network model is used to approximate nonlinear constraints.

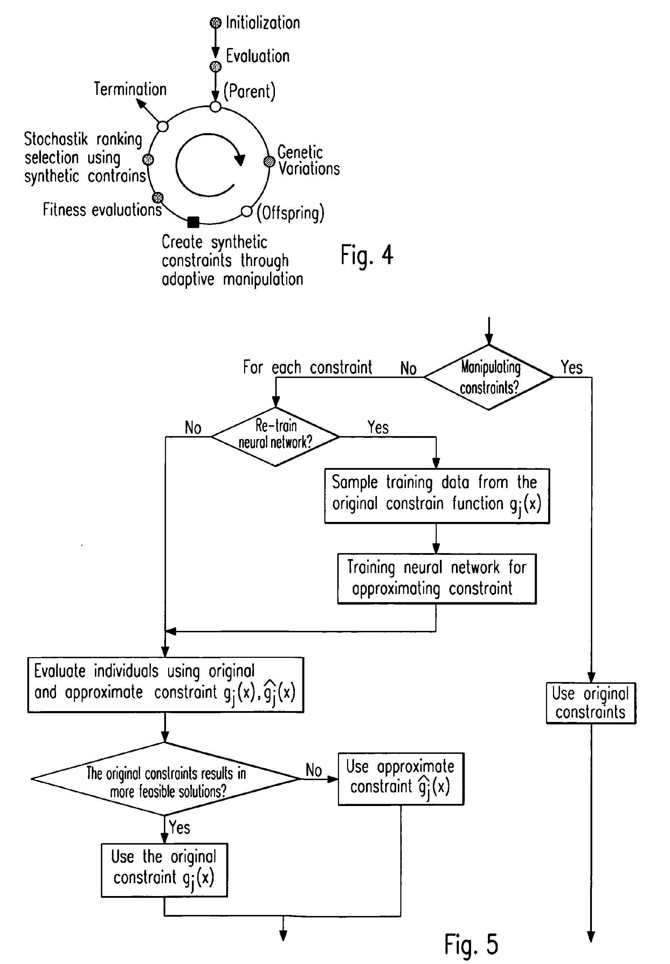

The main components of the invention can be described by the diagram in **Fig. 4,** and new techniques proposed by this invention are described in **Fig. 5.** Instead of always using the original constraints to check if an individual violates the constraints, a neural network model will be used for approximating each nonlinear constraint. Then, individuals are checked with the original and approximate constraints, respectively. The number of feasible solutions will be calculated for each constraint. If the number of feasible solutions is larger according to the original constraint than that of the approximate one, then the original constraint will be used. Otherwise, the synthetic constraint will be used.

For example, if a problem has two nonlinear constraints, $\{g_1(x), g_2(x)\}$, then we also have two approximate constraint functions $\{\hat{g}_1(x), \hat{g}_2(x)\}$. The constraints will compete based on the number of resulting feasible solution. For example, if $g_1(x)$ and $g_2(x)$ results in the highest number of feasible solutions, then the synthetic constraints used in stochastic ranking selection will be $\{\hat{g}_1(x), \hat{g}_2(x)\}$.

The neural network models are trained only in a few of the generations. In addition, the number of samples used for training the neural network should increase gradually so that the accuracy of the model for the constraints is increased gradually. For example, in the first approximate constraint models, two training data pairs are sampled, refer to **Fig. 3(b).** In the second round of training, four data pairs can be sampled, and then nine. The location of the sampled data pairs can be determined by the Latin hypercube sampling method.

Other components of the evolution framework are similar to standard evolutionary algorithms. The main difference is the selection part, i.e., the stochastic ranking method will be used, however, based on the synthetic constraints.

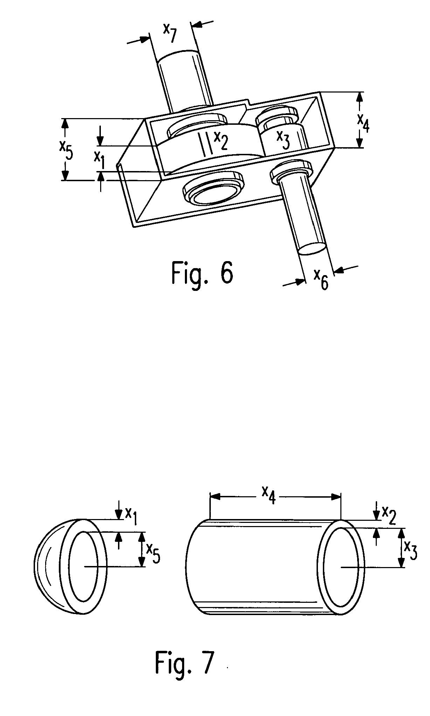

For example, the design optimization of a speed reducer (Refer to **Fig. 6**) can be formulated as the following minimization problem with nonlinear constraints:

*Minimize:*

$$f(\vec{x}) = 0.7854 x_1 x_2^2 (3.3333 x_3^2 + 14.9334 x_3 - 43.0934)$$
$$- 1.508 x_1 (x_6^2 + x_7^2) + 7.4777(x_6^3 + x_7^3)$$
$$+ 0.7854(x_4 x_6^2 + x_5 x_7^2)$$

subject to:

$$g_1(\vec{x}) = \frac{27}{x_1 x_2^2 x_3} - 1 \le 0$$

$$g_2(\vec{x}) = \frac{397.5}{x_1 x_2^2 x_3^2} - 1 \le 0$$

$$g_3(\vec{x}) = \frac{1.93 x_4^3}{x_2 x_3 x_6^4} - 1 \le 0$$

$$g_4(\vec{x}) = \frac{1.93 x_5^3}{x_2 x_3 x_7^4} - 1 \le 0$$

$$g_5(\vec{x}) = \frac{1.0}{110 x_6^3} \sqrt{\left(\frac{745.0 x_4}{x_2 x_3}\right)^2 + 16.9 \times 10^6} - 1 \le 0$$

$$g_6(\vec{x}) = \frac{1.0}{85 x_7^3} \sqrt{\left(\frac{745.0 x_5}{x_2 x_3}\right)^2 + 157.5 \times 10^6} - 1 \le 0$$

$$g_7(\vec{x}) = \frac{x_2 x_3}{40} - 1 \le 0$$

$$g_8(\vec{x}) = \frac{5x_2}{x_1} - 1 \le 0$$

$$g_9(\vec{x}) = \frac{x_1}{12x_2} - 1 \le 0$$

$$g_{10}(\vec{x}) = \frac{1.5x_6 + 1.9}{x_4} - 1 \le 0$$

$$g_{11}(\vec{x}) = \frac{1.1x_7 + 1.9}{x_5} - 1 \le 0$$

As shown, in these examples, a few parameters can fully specify the design. These parameters are encoded and optimized using an EA. Another example is the design of a pressure vessel (refer to Fig. 7):

Minimize:

$$f = 0.6224x_1x_3x_4 + 1.7781x_2x_3^2 + 3.1661x_1^2x_4 + 19.84x_1^2x_3;$$

Subject to:

$$g_1 = -x_1 + 0.0193x_3 \le 0;$$

$$g_2 = -x_2 + 0.00954x_3 \le 0;$$

$$g_3 = -\pi x_3^2 x_4 - \frac{4}{3}\pi x_3^3 + 1296000 \le 0;$$

$$g_4 = x_4 - 240 \le 0;$$

with $1 \le x_1, x_2 \le 99$ and $10 \le x_3, x_4 \le 200$.

The core of the invention is illustrated in Fig. 5, which is a part of an evolution strategy with stochastic ranking selection in Fig. 4.

The invention can be described as follows:

- Generate an initial parent population randomly
- Sample $n_j$ data points for the j-th constraint function using the Latin hypercube method, where $n_j$ is the number of variables involved in the constraint function. If $n_j=1$, sample two data points. Train a neural network model using the sampled data points. Set k=1, $t_u=0$, $t_{max}$, where $t_{max}$ is the allowed maximum of generations. Here, t is the generation index, and k is a counter that counts the number of a neural network model which is retrained for the constrains. This counter also determines the number of samples for retraining the neural network. The trained neural network is used to verify if a candidate solution is feasible in place of the original constraint. In case it is included in the synthetic constraint, it is also used for calculating the penalty value in stochastic ranking (to replace the original constraint function).
- **for** generation ($t<t_{max}$), **do**

○ Apply genetic variations such as recombination and mutation to generate offspring.
○ For each constraint

• if (t-$t_u$=10 * $k^2$)

o Generate $n_j$ $k^2$ samples for the j-th constraint function, train a neural network model for it.
○ $t_u$ = t, k = k+1,

• Compare the number of feasible solutions resulting from the original and the approximate constraints. Take the constraint resulting in a higher number of feasible solutions for the synthetic constraints

○ Evaluate the fitness of each individual
○ Calculate the penalty using the synthetic constrains for each offspring individual if (t+10 $k^2$<$t_{max}$). Otherwise, use the original constraints
○ Do stochastic ranking of the λindividuals based on their fitness and penalty
○ Selecting μ individuals according to the stochastic ranking as the parents
○ t = t+1, end **for**

**References**

[1] Michalewicz, Z. and Schoenauer, M. "Evolutionary algorithms for constrained parameter optimization problems," Evolutionary Computation, vol. 4, pp. 1-32, Mar. 1996.

[2] Coello, C.A.C., "Constraint-handling techniques used with evolutionary algorithms," Proc. GECCO Conference companion on Genetic and Evolutionary Computation, Atlanta, GA, Jul. 2008, pp. 2445-2466 (Tutorial).

[3] Joines J.A. and Houck C.R. On the use of non-stationary penalty functions to solve nonlinear constrained optimization problems. IEEE Conference on Evolutionary Computation. pp.579-584, 1994.

[4] Hamida, S.B. and Schoenauer, M. "An adaptive algorithm for constrained optimization problems," Proc. Parallel Problem Solving form Nature, Paris, French, Sept. 2000, pp. 529-538.

[5] Farmabi, M. and Wright, J.A. "Self-adaptive fitness formulation for constrained optimization," IEEE Trans. Evolutionary Computation, vol. 7, pp. 445-455, Oct. 2003.

[6] Runarsson, T.P., and Yao, X. "Stochastic ranking for constrained evolutionary optimization," IEEE Trans. Evolutionary Computation, vol. 4, pp. 284-294, Sep. 2000.

[7] Surrey, P.D. et al. A multi-objective approach to constrained optimization of gas supply networks. AISB Workshop on Evolutionary Computation. pp.166-180, 1995.

[8] Liepins, G.E. and Vose, M.D. Representational issues in genetic optimization. J. of Experimental Theoretical Artificial Intelligence, 2(2):101-115, 1990.

[9] Bagchi S. et al. Exploring problem-specific recombination operators for job shop scheduling. 4th Int. Conf. on Genetic Algorithms, pp.10-17, 1991.

[10] Coello, C. A. C. Theoretical and numerical constraint-handling techniques used with evolutionary algorithms: a survey of the state of the art. Computer Methods in Applied Mechanics and Engineering, 191:1245-1287, 2002.

**Claims**

1. A method for optimizing a structural design of a physical object, comprising:

- obtaining sensorial information on the object to be optimized,

- generating an initial parent population,
- determining the number of variables involved in a constraint function,
- sampling a number of variables involved in the constraint function as data points for the constraint function based on the determination,
- training a neural network model using the sampled data points,
- setting a generation value for an allowed maximum of generations,
- performing for each generation until the generation value is reached the steps of:

  - applying a genetic variation to individuals to generate offspring from a population,
  - evaluating a fitness of each offspring individual,
  - calculating a penalty using synthetic constrains for each offspring individual,
  - stochastically ranking the offspring individuals based on the fitness and the penalty, and
  - selecting a number of offspring individuals according to the stochastic ranking as the parents for the next population, and
  - returning the best individual representing the optimized design.

2. The method of claim 1, wherein the data points for training the neural network model for approximating constraint functions are sampled using a Latin hypercube method.

3. The method of claim 1 or 2, wherein the number of sampled data points depend on the number of variables involved in the constraint function.

4. The method according to any one of the preceding claims, wherein at least two data points are sampled.

5. The method according to any one of the preceding claims, wherein the accuracy of the approximation increases gradually with the number of data points, which increase with proceeding evolution.

6. The method according to any one of the preceding claims, wherein the application of genetic variations includes performing for each constraint the steps of:

  - generating a new set of data samples for the constraint function,
  - training the neural network model with the sampled data,
  - comparing a number of feasible solutions resulting from the original and a approximate constraints, and
  - using the constraint resulting in a higher number of feasible solutions for the synthetic constraints.

7. The method according to claim 4, wherein the original constraints are used, if the predefined value related to the number of generations is not met.

8. The method according to any one of the preceding claims, wherein the genetic variation is a recombination and/or mutation.

9. The method according to any one of the preceding claims, wherein the initial parent population is random or based on the obtained sensorial information constituting an initial generation.

10. The method according to any one of the preceding claims, wherein the procedure for training the neural network model with a number of samples, comparing a number of feasible solutions resulting from the original and the approximate constraints, and using the constraint resulting in a higher number of feasible solutions for the synthetic constraints needs to be performed is performed before stochastic ranking.

11. The method according to any one of the preceding claims, wherein the original constraints at the final generations are processed before evolution is complete to guarantee that the finally found optimal solution is always feasible.

12. The method according to any one of the preceding claims, wherein the accepting means is at least one of a sensor, a hardware interface and a software interface.

13. The method according to any one of the preceding claims, wherein the processing means is a processor and/or a signal processing unit formed of hardware and/or software.

**14.** The method according to any one of the preceding claims, wherein the processing means is adapted for parallel processing.

**15.** The method according to any one of the preceding claims, wherein the output means is at least one of a hardware interface, a software interface and an actor.

**16.** A computer software program product, performing a method according to any of the preceding claims when run on a computing unit.

**17.** A system for optimizing a structural design of a physical object, comprising:

- an accepting means obtaining sensorial information on the object to be optimized,
- a processing means for executing the method according to any one of the claims 1-15, and
- an output means the best individual representing the optimal design for further processing using an output means.

Fig. 1

Fig. 2

(a)

g₂(x)

g₁(x)

☆ Global optimum

Original feasible region

(b)

ĝ₂(x)

ĝ₁(x)

☆ Global optimum

Manipulated feasible region

○ Training samples

Fig. 3

⊛ Initialization

↓ Evaluation

Termination ↖          ↓ (Parent)

Stochastik ranking
selection using          Genetic
synthetic contrains      Variations

Fitness evaluations      ◯ (Offspring)

■
Create synthetic
constraints through      Fig. 4
adaptive manipulation

For each constraint   No ◇ Manipulating   Yes
                          constraints?

No ◇ Re-train   Yes
     neural network?

Sample training data from the
original constrain function $g_j(x)$

Training neural network for
approximating constraint

Evaluate individuals using original
and approximate constraint $g_j(x), \widehat{g_j}(x)$

◇ The original constraints results in   No   Use approximate
   more feasible solutions?                  constraint $\widehat{g_j}(x)$

↓ Yes

Use the original
constraint $g_j(x)$

Use original
constraints

Fig. 5

Fig. 6

Fig. 7

Europäisches
Patentamt

European
Patent Office

Office européen
des brevets

**EUROPEAN SEARCH REPORT**

Application Number

EP 10 15 1859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The technical aspects identified in the present application are considered part of the common general knowledge. Due to their notoriety no documentary evidence is found to be required. For further details see the accompanying Opinion and the reference below.<br>----- | 1-17 | INV.<br>G06Q99/00 |
| | | | **TECHNICAL FIELDS SEARCHED (IPC)**<br><br>G06Q |

The present search report has been drawn up for all claims

| Place of search | Date of completion of the search | Examiner |
|---|---|---|
| Munich | 8 July 2010 | Pastore, Edoardo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MICHALEWICZ, Z. ; SCHOENAUER, M.** Evolutionary algorithms for constrained parameter optimization problems. *Evolutionary Computation,* March 1996, vol. 4, 1-32
- **COELLO, C.A.C.** Constraint-handling techniques used with evolutionary algorithms. *Proc. GECCO Conference companion on Genetic and Evolutionary Computation,* July 2008, 2445-2466
- **JOINES J.A. ; HOUCK C.R.** On the use of non-stationary penalty functions to solve nonlinear constrained optimization problems. *IEEE Conference on Evolutionary Computation.,* 1994, 579-584
- **HAMIDA, S.B. ; SCHOENAUER, M.** An adaptive algorithm for constrained optimization problems. *Proc. Parallel Problem Solving form Nature,* September 2000, 529-538
- **FARMABI, M. ; WRIGHT, J.A.** Self-adaptive fitness formulation for constrained optimization. *IEEE Trans. Evolutionary Computation,* October 2003, vol. 7, 445-455
- **RUNARSSON, T.P. ; YAO, X.** Stochastic ranking for constrained evolutionary optimization. *IEEE Trans. Evolutionary Computation,* September 2000, vol. 4, 284-294
- **SURREY, P.D. et al.** A multi-objective approach to constrained optimization of gas supply networks. *AISB Workshop on Evolutionary Computation,* 1995, 166-180
- **LIEPINS, G.E. ; VOSE, M.D.** Representational issues in genetic optimization. *J. of Experimental Theoretical Artificial Intelligence,* 1990, vol. 2 (2), 101-115
- **BAGCHI S. et al.** Exploring problem-specific recombination operators for job shop scheduling. *4th Int. Conf. on Genetic Algorithms,* 1991, 10-17
- **COELLO, C. A. C.** Theoretical and numerical constraint-handling techniques used with evolutionary algorithms: a survey of the state of the art. *Computer Methods in Applied Mechanics and Engineering,* 2002, vol. 191, 1245-1287